# EUROPÄISCHE PATENTSCHRIFT

(11) **EP 3 693 711 B1**
(45) Veröffentlichungstag und Bekanntmachung des Hinweises auf die Patenterteilung: **02.06.2021**
(21) Anmeldenummer: 19156513.4
(22) Anmeldetag: 11.02.2019
(51) Int. Cl.: H01Q 13/02, H01Q 15/08, H01Q 19/08, G01F 23/284, H01Q 1/22

(54) **RADARMESSVORRICHTUNG MIT PLANKONVEXER LINSE**
RADAR MEASUREMENT DEVICE WITH PLANE CONVEX LENS
DISPOSITIF DE MESURE RADAR POURVU DE LENTILLE PLANE-CONVEXE

(43) Veröffentlichungstag der Anmeldung: 12.08.2020
(73) Patentinhaber: VEGA Grieshaber KG, 77709 Wolfach (DE)
(72) Erfinder: WÄLDE, Steffen, 78078 Niedereschach (DE); DIETERLE, Levin, 77709 Oberwolfach (DE)
(74) Vertreter: Maiwald Patent- und Rechtsanwaltsgesellschaft mbH

(56) Entgegenhaltungen:
- WO-A2-02/50954
- DE-A1- 4 025 326
- DE-A1-102005 036 846
- DE-A1-102012 016 120
- DE-A1-102016 217 614
- US-A- 4 566 321

## Beschreibung

### Gebiet der Erfindung

Die Erfindung betrifft eine Radarmessvorrichtung zur Füllstands- und/oder Grenzstandsüberwachung, ein Verfahren zur Montage einer Radarmessvorrichtung an einem Behälter und eine Radarmessanordnung.

### Technischer Hintergrund

In der Prozessautomation werden vielfältig Radarsensoren zur Bestimmung des Füllstands und/oder des Grenzstands eingesetzt. In manchen Anwendungsfällen kann mit einem Radarsensor durch eine Behälterwand hindurch gemessen werden. Dies kann mit Radarsensoren erfolgen, welche in einem definierten Abstand zum Behälter angeordnet werden, um den Füllstand bzw. den Grenzstand in dem Behälter zu ermitteln. Dabei wird der Abstand zwischen der Antenne des Radarsensors und dem Behälter so gewählt, dass dieser sich im Fernfeld der Antenne befindet. Dies kann insbesondere den Vorteil aufweisen, dass sich eine annäherungsweise ebene Wellenfront ausbildet, bevor die Welle durch die Behälterwand dringt. Diese Anordnung kann einen großen Platzbedarf haben, aufgrund des benötigten Abstands zwischen dem Radarsensor und der Behälterwand, sodass gerade bei bauraumsensiblen Anwendungen, wie beispielsweise mobilen Behältern, es zu Platz- und/oder Anordnungsproblemen kommt.

DE 10 2012 016120 A1 offenbart ein Mikrowellenfenster zur räumlichen, druck- und diffusionsdichten Trennung und eine Mikrowellenverbindung eines ersten Raumes mit einem zweiten Raum.

WO 02/50954 offenbart eine Mikrowellenhornantennenstruktur, die zur Verwendung in Füllstandsmessgeräten geeignet ist.

DE 40 25326 offenbart ein Verfahren, welches einen Ultraschallimpuls durch eine Flüssigkeit sendet.

DE 10 2016 217614 offenbart eine Antennenanordnung für ein Füllstandsmessgerät.

DE 10 2005 036846 offenbart eine Vorrichtung zum Messen eines Füllstands eines Füllguts. US 4 566 321 offenbart ein Füllstandsmesssystem, welches in einem Gehäuse angebracht ist.

### Zusammenfassung der Erfindung

Mit den im Folgenden beschriebenen Ausführungsformen der Erfindung kann in vorteilhafter Weise eine verbesserte Radarmessvorrichtung bereitgestellt werden.

Die Erfindung wird durch die unabhängigen Ansprüche definiert. Ferner ergeben sich weitere Ausführungsformen aus den abhängigen Ansprüchen sowie der Beschreibung.

Ein Aspekt betrifft eine Radarmessvorrichtung zur Füllstands- und/oder Grenzstandsüberwachung, welche eine Radarsignalquelle aufweist, die dazu eingerichtet ist, ein Radarsignal zu erzeugen, auszusenden und/oder zu empfangen. Zudem weist die Radarmessvorrichtung eine Antennenanordnung auf, die dazu eingerichtet ist, das Radarsignal auszurichten. Des Weiteren weist die Radarmessvorrichtung eine plankonvexe Linse mit einer planen, insbesondere einem Füllgut zugewandten Seite auf, welche dazu eingerichtet ist, das ausgerichtete Radarsignal zu fokussieren. Dabei ist die plane Seite der plankonvexen Linse als Kontaktfläche ausgeführt, um während einer Messung des Füllstands- und/oder Grenzstands des Füllguts in einem Behälter, auf dem Behälter aufzuliegen.

Ein Vorteil kann sein, dass die Radarmessvorrichtung eine deutlich verringerte Erstreckungslänge aufweist, da die Linse direkt an dem Behälter angeordnet werden kann und somit nicht in einem vorbestimmten Abstand zur Behälterwand angeordnet ist. Dies spart Bauraum, welcher für weitere Komponenten genutzt werden kann. Zusätzlich kann die Radarmessvorrichtung deutlich einfacher montiert werden, da die Radarmessvorrichtung durch die plane Seite der plankonvexen Linse direkt mittels einer Verbindung auf dem Behälter angebracht werden kann. Insbesondere eine Klebverbindung ermöglicht es, die Radarmessvorrichtung ohne weitere Hilfsmittel an dem Behälter zu befestigen. Zwar können die Hochfrequenzeigenschaften der Radarmessvorrichtung durch die direkte Montage auf der Behälteraußenwand verschlechtert werden, jedoch können die Vorteile der direkten Montage sowie der direkten Kontaktierung den möglichen Nachteilen überlegen sein.

Bei der Radarsignalquelle handelt es sich insbesondere um einen Halbleiterchip, welcher einen Radarsignalgenerator und eine Radarantenne aufweist. Dabei kann es sich bei der Radarsignalquelle auch um alternative Ausgestaltungen handeln, welche dazu in der Lage sind, ein Radarsignal zu erzeugen, auszusenden und/oder zu empfangen. Zudem kann die Radarsignalquelle dazu eingerichtet sein, ein Radarsignal zu empfangen, wobei insbesondere die Radarantenne dazu ausgelegt ist, sowohl das Radarsignal auszusenden als auch zu empfangen.

Zusätzlich kann die Radarmessvorrichtung eine Antennenanordnung umfassen, welche dazu eingerichtet ist, ein Radarsignal auszurichten, sodass die Reflexionseigenschaften als auch die Nebenkeulenunterdrückung deutlich verbessert werden können. Dabei kann die Antennenanordnung direkt an der Radarsignalquelle befestigt sein und auf der anderen Seite der Antennenanordnung die plankonvexe Linse aufnehmen. Die Antennenanordnung kann derart ausgelegt sein, dass sie sowohl die ausgesendeten Radarsignale als auch die empfangenen Radarsignale ausrichtet.

Des Weiteren weist die Radarmessvorrichtung eine plankonvexe Linse auf, welche eine plane Seite aufweist, die dem Füllgut zugewandt ist. Dabei ist die plankonvexe Linse dazu eingerichtet, das ausgerichtete Radarsignal zu fokussieren. Neben der planen Seite weist die plankonvexe Linse ebenfalls eine konvexe Seite auf. Dabei ragt die konvexe Seite der Linse in die Antennenanordnung hinein. Zudem weist die plankonvexe Linse eine plane Seite auf, welche dazu eingerichtet ist, zumindest teilweise auf einem Behälter aufzuliegen. Insbesondere kann die plane Seite der plankonvexen Linse derart ausgelegt sein, dass diese an dem Behälter festgelegt ist, sodass die plankonvexe Linse die gesamte Radarmessvorrichtung an dem Behälter hält. Dabei weist die plankonvexe Linse eine Kontaktfläche zwischen der plankonvexen Linse und dem Behälter auf, indem die plane Seite der plankonvexen Linse flächig auf dem Behälter aufliegt. Die plane Seite der plankonvexen Linse kann auch eine leichte Krümmung aufweisen, sodass eine durchgängige Kontaktfläche zwischen der plankonvexen Linse und dem Behälter entsteht, wenn dieser einen runden Querschnitt aufweist. Alternativ kann die Radarmessvorrichtung dazu eingerichtet sein, an der planen Seite der plankonvexen Linse auf einem Behälter zumindest teilweise aufzuliegen und eine Kontaktfläche zwischen der plankonvexen Linse und dem Behälter auszubilden. Ebenso kann die Radarmessvorrichtung auf eine Außenseite, als auch auf einer Innenseite des Behälters angeordnet werden. Alternativ kann die Radarmessvorrichtung auch auf und/oder in einem Rohr, Bypass oder Ähnlichem angeordnet werden.

Gemäß einer beispielhaften Ausführungsform kann die plankonvexe Linse mittels einer kraft- , form- und/oder stoffschlüssigen Verbindung insbesondere mit einer Klebeverbindung an dem Behälter anbringbar sein, sodass die Radarmessvorrichtung an dem Behälter befestigt ist. Die Antennenanordnung kann eine Planarantenne, eine Planarantenne mit Hornantenne und/oder eine Hornantenne sein. In einer beispielhaften Ausführungsform kann die Radarmessvorrichtung mit einem doppelseitigen Klebeband oder ähnlichen Klebemitteln an dem Behälter festgelegt sein. Beispielhafterweise kann die plankonvexe Linse mittels einer Schraub- oder Pressverbindung an dem Behälter anbringbar sein. Ebenso kann die plankonvexe Linse formschlüssig mittels eines Bajonettverschlusses an dem Behälter angeordnet werden. Des Weiteren kann die plankonvexe Linse mittels einer stoffschlüssigen Verbindung, wie beispielsweise durch Ultraschallschweißen oder Reibschweißen, an dem Behälter angebracht werden. Der Vorteil dieser Ausführungsform kann sein, dass mittels einer stoffschlüssigen Verbindung die Radarmessvorrichtung schnell und einfach auf den Behälter kontaktiert werden kann, sodass eine Reduzierung der Montagezeit und somit der Kosten erfolgt.

Gemäß einer beispielhaften Ausführungsform kann die plankonvexe Linse aus demselben Material, insbesondere einem Kunststoffverbund, gefertigt sein, wie zumindest ein Teil des Behälters. Beispielsweise können sowohl die plankonvexe Linse als auch der Behälter aus einem High Density Polyethylen (HDPE) gefertigt sein. Alternative Kunststoffe, welche eine ähnliche Permittivität wie HDPE aufweisen, sind ebenfalls denkbar. Zudem kann der Kunststoffverbund auch Verstärkungselemente, wie beispielsweise Kurzglasfasern oder Karbonfasern aufweisen. Dabei kann der Behälter vollständig und/oder teilweise aus einem Kunststoffverbund gefertigt sein. Vorteilhafterweise kann der Teil des Behälters aus demselben Material gefertigt sein, wie die plankonvexe Linse, sodass an der Kontaktfläche an der plankonvexen Linse und dem Behälter beide Komponenten aus demselben Material gefertigt sind. Der Vorteil dieser Anordnung kann sein, dass durch die Anpassung der Permittivität der beiden Komponenten die Reflexionseigenschaften und die Nebenkeulenunterdrückung verbessert werden, da besonders kleine Impedanzsprünge vorhanden sind.

Gemäß einer beispielhaften Ausführungsform kann die Antennenanordnung eine Hornantenne aufweisen, wobei eine konvexe Seite der plankonvexen Linse einen Durchmesser aufweisen kann, welcher einem maximalen Innendurchmesser der Hornantenne entspricht. Dabei kann die Linse eine konvexe Seite aufweisen, welche insbesondere rotationssymmetrisch ausgebildet sein kann. Die konvexe Seite der plankonvexen Linse kann dabei in die Hornantenne hineinragen, sodass der Umfang der konvexen Seite dem maximalen Innendurchmesser der Hornantenne entspricht. Dabei kann die Antennenanordnung auch durch eine Hornantenne ausgebildet sein. Dies kann insbesondere der Fokussierung der Radarsignale dienlich sein, da die vollständig zur Verfügung stehende Fläche der Hornantenne und/oder der plankonvexen Linse genutzt wird und somit eine gleichmäßige Fokussierung der Radarsignale stattfinden kann.

Gemäß einer beispielhaften Ausführungsform kann das Verhältnis der Oberfläche der konvexen Seite der plankonvexen Linse zu der planen Seite der plankonvexen Linse zwischen 0,5 und 5 liegen. Bei der Oberfläche der konvexen Seite und/oder der planen Seite kann es sich um eine Fläche handeln, welche in mm² und/oder cm² angegeben wird. Der Betrag der Oberfläche der konvexen Seite kann somit in ein Verhältnis zur Oberfläche der planen Seite der plankonvexen Linse gesetzt werden. Dabei kann das Verhältnis zwischen 0,5 und 5 liegen. Das Verhältnis zwischen der Oberfläche der konvexen Seite und der planen Seite kann insbesondere eine Wölbung der konvexen Seite beschreiben. Bevorzugt kann das Verhältnis zwischen der konvexen Seite und der plankonvexen Seite zwischen 0,8 und 3 liegen, besonders bevorzugt zwischen 0,9 und 2 liegen. Bei dem Verhältnis zwischen 0,9 und 2 konnte überraschenderweise eine deutliche Verbesserung der Reflexionseigenschaften und der Nebenkeulenunterdrückung festgestellt werden.

Erfindungsgemäß umfasst die Radarmessvorrichtung ein Gehäuse, wobei in dem Gehäuse die Antennenanordnung und/oder die Radarsignalquelle angeordnet sind. Zudem weist das Gehäuse zumindest eine Unterseite auf, wobei die Unterseite zumindest teilweise durch die plankonvexe Linse gebildet ist. Zudem kann die Unterseite zumindest teilweise auf dem Behälter aufliegen. In anderen Worten kann die Radarmessvorrichtung ein Gehäuse aufweisen, in welchem die Antennenanordnung und/oder die Radarsignalquelle angeordnet sein können und das Gehäuse an den Behälter montiert werden kann. Die Unterseite des Gehäuses wird durch die plankonvexe Linse gebildet, sodass die plane Seite der plankonvexen Linse an dem Behälter anliegen kann. Dies kann den Vorteil mit sich bringen, dass das Gehäuse direkt an dem Behälter angeordnet werden kann und somit kein weiteres Hilfsmittel benötigt wird. Zudem kann eine Funktionsintegration stattfinden, da die plankonvexe Linse sowohl das Radarsignal fokussiert als auch sämtliche Komponenten der Radarmessvorrichtung an dem Behälter befestigt.

Gemäß einer beispielhaften Ausführungsform kann die plankonvexe Linse aus demselben Material wie das übrige Gehäuse bestehen. In anderen Worten kann das Gehäuse und die plankonvexe Linse aus demselben Material, bspw. ein Kunststoffverbund, gefertigt sein, sodass sich beide Komponenten bspw. mittels eines Schweißverfahrens, wie Ultraschallschweißen, miteinander verbinden lassen. Alternativ können auch die Komponenten der Radarmessvorrichtung einteilig mittels eines Mehrkomponentenspritzgießverfahrens hergestellt werden. Dies kann den Vorteil aufweisen, dass durch die Abstimmung der Materialien aufeinander eine Fügevorgang und/oder die Montage insgesamt verkürzt bzw. vereinfacht wird und somit ein Kosteneinsparungseffekt entsteht. Dabei kann die einteilige Form ebenfalls zur Dichtheit der Radarmessvorrichtung beitragen.

Gemäß einer beispielhaften Ausführungsform kann ein Linsenabsatz die konvexe Seite der plankonvexen Linse zumindest teilweise umlaufend umschließen. Zusätzlich kann der Linsenabsatz parallel zur planen Seite der plankonvexen Linse ausgebildet sein, wobei der Linsenabsatz zumindest einen Teil der Unterseite ausbildet. In anderen Worten kann die Seite der plankonvexen Linse, welche ebenfalls die konvexe Seite umfasst, zusätzlich einen Linsenabsatz aufweisen, welcher parallel zur planen Seite ausgebildet ist. Der Linsenabsatz kann ebenso einen Teil der Unterseite des Gehäuses ausbilden, sodass sich die Kontaktfläche zwischen der plankonvexen Linse und dem Behälter vergrößert. Dies kann den Vorteil aufweisen, dass bei einer Antennenanordnung, welche nicht die gesamte Unterseite des Gehäuses bedeckt, der Linsenabsatz die Unterseite des Gehäuses vollständig ausbilden kann.

Gemäß einer beispielhaften Ausführungsform kann das Gehäuse mit einer Füllmasse, insbesondere mit einer Vergussmasse, befüllt werden, wobei die Füllmasse dazu ausgelegt sein kann, die Antennenanordnung und/oder die Radarsignalquelle vor Feuchtigkeit zu schützen. In anderen Worten kann das Gehäuse vollständig nach der Montage der Antennenanordnung und/oder der Signalradarquelle mit einer Füllmasse, wie beispielsweise einem Schaum oder ein Gel, befüllt werden, sodass alle Komponenten innerhalb des Gehäuses vor Feuchtigkeit geschützt werden. Dies kann den Vorteil haben, dass die Radarmessvorrichtung auch in anspruchsvollen Umgebungen, wie beispielsweise starke Wetterbedingungen, eingesetzt werden kann. Bspw. kann die Füllmasse bzw. die Vergussmasse für Radarmessvorrichtungen eingesetzt werden, welche eine Explosionsschutzzulassung benötigen.

Gemäß einer beispielhaften Ausführungsform kann die Radarmessvorrichtung einen Energiespeicher aufweisen, welcher dazu ausgelegt sein kann, die Radarmessvorrichtung mit Energie dauerhaft zu versorgen. Bei dem Energiespeicher handelt es sich bevorzugt um einen Lithium-Ionen-Akku oder ein vergleichbarer Energiespeicher, welcher bevorzugt auch induktiv geladen werden kann. Der Energiespeicher kann ebenso in dem Gehäuse angeordnet sein. Der Vorteil dieser Ausführungsform kann sein, dass die Radarmessvorrichtung auch autark operieren kann, sodass diese nicht auf eine externe Stromquelle angewiesen ist.

Gemäß einer beispielhaften Ausführungsform kann die Antennenanordnung und die plankonvexe Linse mittels einer form-, kraft- und/oder stoffschlüssigen Verbindung verbunden werden und/oder verbindbar sein. In einer Ausführungsform kann die plankonvexe Linse mittels einer Klebverbindung an der Antennenanordnung befestigt werden. Alternativ können auch eine Schraubverbindung, ein Bajonettverschluss oder eine kraftschlüssige Verbindung, wie beispielsweise eine Schraubverbindung, angewendet werden. Der Vorteil dieser Ausführungsform kann sein, dass die Linse und die Antennenanordnung erst bei der Montage der plankonvexen Linse miteinander verbunden werden, sodass beispielsweise die plankonvexe Linse die Unterseite des Gehäuses bilden kann.

Gemäß einer beispielhaften Ausführungsform kann die form-, kraft- und/oder stoffschlüssige Verbindung zwischen der Antennenanordnung und der plankonvexen Linse eine Dichtung aufweisen, welche dazu eingerichtet ist, dass keine Verunreinigungen und/oder Feuchtigkeit in die Antennenanordnung und/oder die Radarsignalquelle eindringen können. Die Dichtung kann sowohl an der Außenseite der Antennenanordnung als auch an der Innenseite der Antennenanordnung vorgesehen werden. Dabei kann die plankonvexe Linse eine Ausnehmung aufweisen, in welcher die Dichtung angeordnet werden kann, sodass bei der Montage der plankonvexen Linse an die Antennenanordnung die Dichtung zwischen der Antennenanordnung und der plankonvexen Linse ausgebildet wird. Bei der Dichtung kann es sich um einen O-Ring oder vergleichbares handeln. Der Vorteil dieser Ausführungsform kann sein, dass die Dichtheit der Verbindung zwischen der plankonvexen Linse und der Antennenanordnung verbessert wird, sodass die Innenseite der Antennenanordnung als auch die der plankonvexen Linse vor Verunreinigungen und/oder Feuchtigkeit geschützt sind und somit eine erhöhte Lebensdauer der Radarmessvorrichtung gewährleistet werden kann.

Gemäß einer beispielhaften Ausführungsform kann die Antennenanordnung und die plankonvexe Linse rotationssymmetrisch ausgebildet werden. Dabei kann sowohl die Antennenanordnung als auch die plankonvexe Linse jeweils rotationssymmetrisch ausgebildet sein. Alternativ können auch die Antennenanordnung und die plankonvexe Linse rotationssymmetrisch zueinander ausgebildet werden. Der Vorteil einer rotationssymmetrischen Ausbildung der Antennenanordnung und der plankonvexen Linse kann sein, dass eine Montage der plankonvexen Linse an die Antennenanordnung vereinfacht werden kann.

Ein weiterer Aspekt betrifft ein Verfahren zur Montage einer Radarmessvorrichtung, insbesondere wie vorangehend und nachfolgend beschrieben. Das Verfahren kann den Schritt umfassen, wobei eine Verbindung, insbesondere mithilfe eines Klebstoffes, zwischen einer planen Fläche einer Linse der Radarmessvorrichtung und einem Behälter ausgebildet werden kann. In anderen Worten wird eine plane Fläche einer Linse einer Radarmessvorrichtung direkt auf einen Behälter aufgebracht. In einem Ausführungsbeispiel kann die Verbindung mithilfe eines Klebstoffes oder eines selbstklebenden Klebebandes zwischen der Linse und dem Behälter ausgebildet werden. Alternativ kann die Verbindung auch mittels eines Ultraschallschweißverfahrens zwischen der Linse und dem Behälter ausgebildet werden. Der Vorteil dieser Ausführungsform kann sein, dass mithilfe der direkten Kontaktierung Montagezeit eingespart werden kann als auch die Radarmessvorrichtung an schwer zugänglichen Orten mithilfe eines Hilfsmittels positioniert werden kann.

Ein weiterer Aspekt betrifft eine Radarmessanordnung, welche eine Radarmessvorrichtung, wie voranstehend und nachfolgend beschrieben, aufweist. Zudem kann die Radarmessanordnung einen Behälter, der dazu eingerichtet ist, ein Medium aufzunehmen, aufweisen. Dabei kann die Radarmessvorrichtung zumindest teilweise auf dem Behälter aufliegen und eine Kontaktfläche ausbilden. Zudem kann der Behälter an der Kontaktfläche keine Ausnehmung und/oder Aufnahmevorrichtung aufweisen. In anderen Worten kann die Radarmessvorrichtung an dem Behälter montiert werden, wobei die Montage eine Kontaktfläche zwischen der Radarmessvorrichtung und dem Behälter ausbildet, wobei an der Kontaktfläche der Behälter keine Ausnehmung oder Aufnahmevorrichtung aufweist. Dies kann den Vorteil aufweisen, dass der Behälter nicht zur Montage der Radarmessvorrichtung modifiziert werden muss, was zu einer Reduzierung der Montagezeit als auch des Montageaufwandes führen kann.

Ferner kann die Radarmessanordnung eine Radarmessvorrichtung und einen Behälter aufweisen, welche an deren Kontaktfläche zumindest teilweise eine im Wesentlichen gleiche Permittivität aufweisen. Eine im Wesentlichen gleiche Permittivität bedeutet in diesem Zusammenhang eine Abweichung der Permittivität um plus/minus 100 % zur Permittivität der Radarmessvorrichtung, insbesondere der plankonvexen Linse. Der Vorteil dieser Ausführungsform kann sein, dass möglichst kleine Impedanzsprünge auftreten, welche zu einer verbesserten Reflexionseigenschaft und/oder Nebenkeulenunterdrückung führen.

Merkmale und Elemente der Radarmessvorrichtung, so wie voranstehend und nachfolgend beschrieben, können Merkmale, Elemente und Schritte des Verfahrens, so wie voranstehend und nachfolgend beschrieben, sein und umgekehrt.

Im Folgenden werden Ausführungsbeispiele der Erfindung unter Bezugnahme auf die Figuren beschrieben.

### Kurze Beschreibung der Figuren

Fig. 1 zeigt einen schematischen Schnitt durch eine plankonvexe Linse gemäß einem Ausführungsbeispiel.
Fig. 2 zeigt einen schematischen Schnitt durch eine plankonvexe Linse gemäß einem Ausführungsbeispiel.
Fig. 3 zeigt einen schematischen Schnitt durch eine Radarmessvorrichtung gemäß einem Ausführungsbeispiel.
Fig. 4 zeigt einen schematischen Schnitt durch eine Radarmessvorrichtung gemäß einem Ausführungsbeispiel.
Fig. 5 zeigt einen schematischen Schnitt durch eine Radarmessanordnung gemäß einem Ausführungsbeispiel.
Fig. 6 zeigt einen schematischen Schnitt durch eine Radarmessvorrichtung gemäß einem Ausführungsbeispiel.
Fig. 7 zeigt ein Flussdiagramm zur Illustration von Schritten eines Verfahrens zur Montage einer Radarmessvorrichtung gemäß einem Ausführungsbespiel.

Die Figuren sind lediglich schematisch und nicht maßstabsgetreu. In den Figuren können gleiche, gleichwirkende oder ähnliche Elemente mit gleichen Bezugszeichen versehen sein.

### Detaillierte Beschreibung von Ausführungsbeispielen

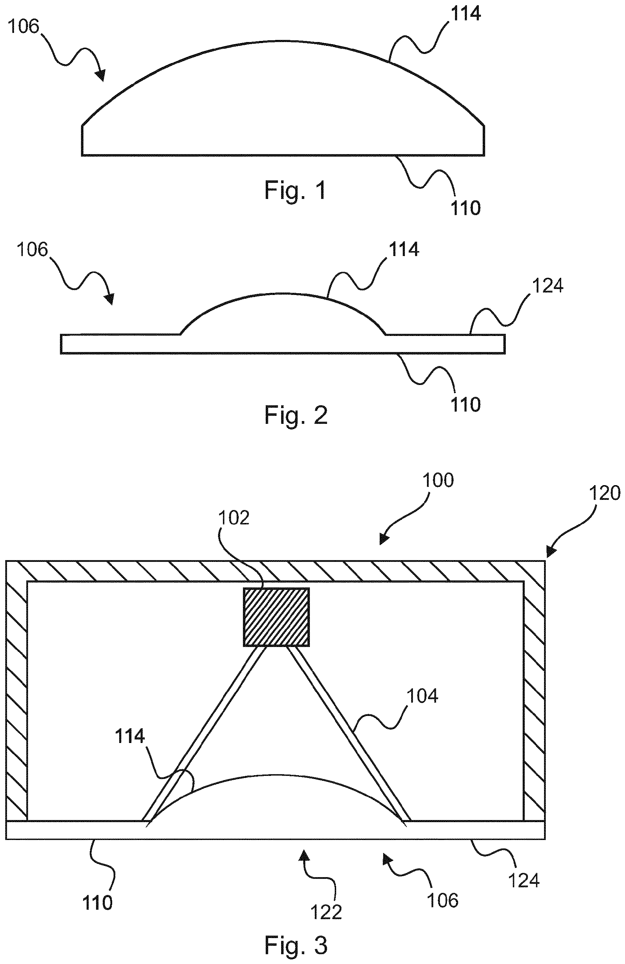

Fig. 1 zeigt eine plankonvexe Linse 106 gemäß einem Ausführungsbeispiel. Die plankonvexe Linse 106 weist eine plane Seite 110 sowie gegenüberliegend zur planen Seite eine konvexe Seite 114 auf. Dabei kann die plane Seite 110 an einem Behälter 108 festgelegt werden. Die konvexe Seite 114 kann an einer Antennenanordnung 104 festgelegt werden.

Fig. 2 zeigt eine plankonvexe Linse 106 gemäß einem Ausführungsbeispiel. Die plankonvexe Linse 106 weist eine plane Seite 110 und eine konvexe Seite 114 auf. Zudem weist die plankonvexe Linse 106 einen Linsenabsatz 124 auf, welcher sich umlaufend um die plankonvexe Seite 114 erstreckt. Dabei kann der Linsenabsatz 124 eine Fläche zur Festlegung der Radarmessvorrichtung 100 an einem Behälter 108 ausbilden.

Fig. 3 zeigt eine Radarmessvorrichtung 100 gemäß einem Ausführungsbeispiel. Die Radarmessvorrichtung 100 weist eine Radarsignalquelle 102 auf, an welcher eine Antennenanordnung 104 angeordnet ist. An der Antennenanordnung 104 ist die plankonvexe Linse 106 angeordnet. Die plankonvexe Linse 106 weist eine plane Seite 110 und eine konvexe Seite 114 auf. Die konvexe Seite 114 ragt in die Antennenanordnung 104 hinein. Zudem weist die Radarvorrichtung 100 ein Gehäuse 120 auf. Das Gehäuse 120 weist eine Unterseite 122 auf, welche durch die plane Seite 110 der plankonvexen Linse 106 gebildet wird. Dabei weist die plane Seite 110 der plankonvexen Linse 106 einen Linsenabsatz 124 auf, welcher ebenfalls einen Teil der Unterseite 122 bildet.

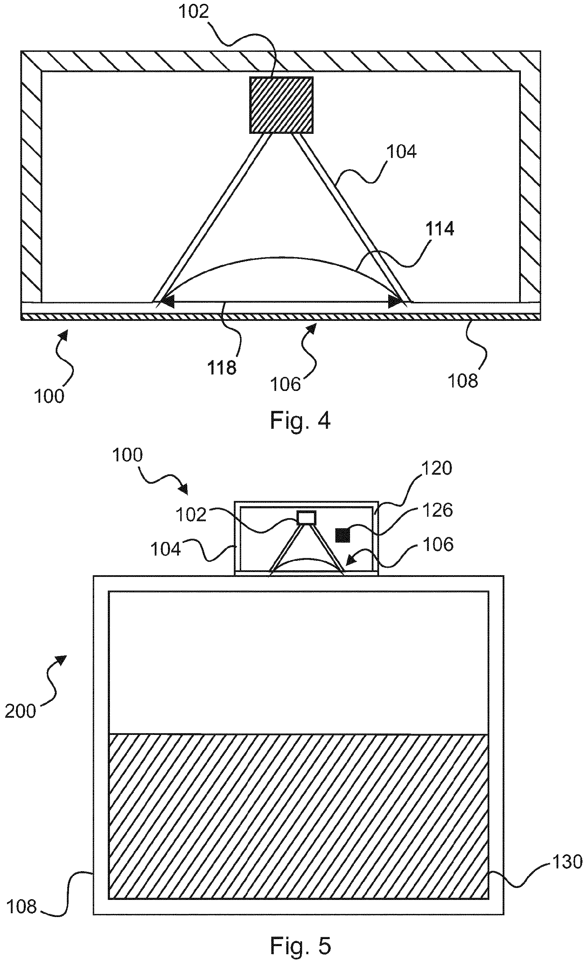

Fig. 4 zeigt eine Radarmessvorrichtung 100 gemäß einem Ausführungsbeispiel. Die Radarmessvorrichtung 100 weist eine Radarsignalquelle 102 auf, an welcher eine Antennenanordnung 104 angeordnet ist. An der Antennenanordnung 104 ist die plankonvexe Linse 106 angebracht. Die plankonvexe Linse weist eine konvexe Seite 114 auf, welche den gleichen Durchmesser aufweist, wie ein maximaler Innendurchmesser 118 der Antennenanordnung 104. Zudem ist die Radarmessvorrichtung 100 an einem Behälter 108 montiert, wobei die plankonvexe Linse 106 flächig auf dem Behälter 108 aufliegt. Insbesondere kann die Verbindung zwischen der plankonvexen Linse 106 und dem Behälter 108 durch eine Klebverbindung hergestellt werden.

Fig. 5 zeigt eine Radarmessanordnung 200, welche eine Radarmessvorrichtung 100 aufweist sowie einen Behälter 108, der ein Medium 130 aufnimmt. Die Radarmessvorrichtung 100 ist mittels der plankonvexen Linse 106 an dem Behälter 108 angeordnet. Die plankonvexe Linse 106 ist Teil des Gehäuses 120 der Radarmessvorrichtung 100. Zudem weist die Radarmessvorrichtung 100 eine Radarsignalquelle 102 auf, an welcher eine Antennenanordnung 104 angeordnet ist. Zudem weist die Radarmessvorrichtung einen Energiespeicher 126 zur Energieversorgung der Radarmessvorrichtung 100 auf, welcher ebenfalls in dem Gehäuse 120 der Radarmessvorrichtung 100 angeordnet ist.

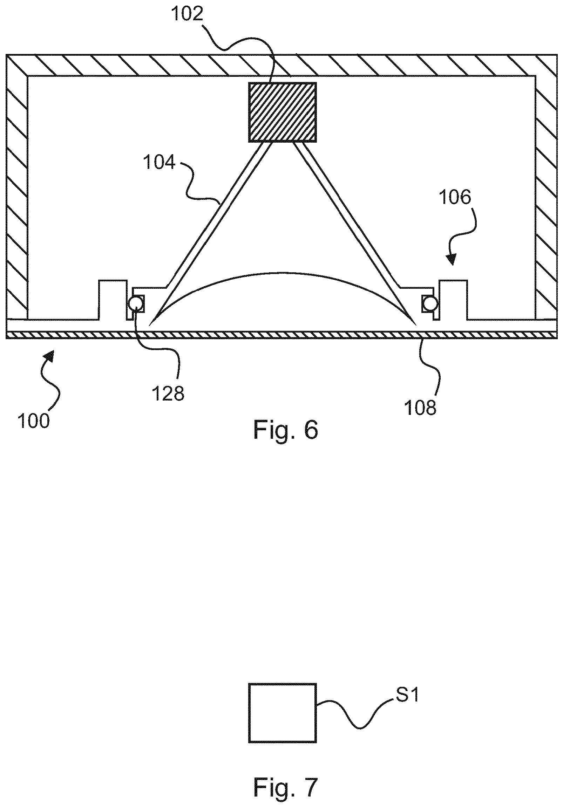

Fig. 6 zeigt eine Radarmessvorrichtung 100 gemäß einem Ausführungsbeispiel. Die Radarmessvorrichtung 100 weist eine plankonvexe Linse 106 auf, welche dazu ausgelegt ist, an eine Dichtung 128, welche an der Antennenanordnung 104 angebracht ist, montiert zu werden. Zudem weist die Radarmessvorrichtung 100 eine Radarsignalquelle 102 auf. Die Dichtung 128 ist bevorzugt zwischen der plankonvexen Linse 106 und der Antennenanordnung 104 angebracht, sodass keine Feuchtigkeit oder Verunreinigungen in die Antennenanordnung 104 gelangen. Zudem ist die Radarmessvorrichtung 100 mittels der plankonvexen Linse 106 an dem Behälter 108 angeordnet.

Fig. 7 zeigt ein Flussdiagramm zur Illustration von Schritten des Verfahrens zur Montage einer Radarmessvorrichtung 100 gemäß einem Ausführungsbeispiel. Sofern nicht anders beschrieben, weist die Radarmessvorrichtung 100 dieselben Elemente und Merkmale wie die Radarmessvorrichtung der Figuren 1 bis 6 auf.

In dem Schritt S1 wird eine Verbindung zwischen einer planen Fläche 110 einer Linse der Radarmessvorrichtung 100 und einem Behälter 108 ausgebildet. Diese Verbindung kann insbesondere mithilfe eines Klebstoffes oder einer stoff-, form- und/oder kraftschlüssigen Verbindung hergestellt werden.

Ergänzend sei daraufhingewiesen, dass "umfassend" und "aufweisend" keine anderen Elemente ausschließt und die unbestimmten Artikel "eine" oder "ein" keine Vielzahl ausschließen. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkungen anzusehen.

## Patentansprüche

1. Radarmessvorrichtung (100) zur Füllstands- und/oder Grenzstandsüberwachung, aufweisend:
- eine Radarsignalquelle (102), eingerichtet zum Erzeugen, Aussenden und/oder Empfangen eines Radarsignals,
- eine Antennenanordnung (104), eingerichtet zum Ausrichten des Radarsignals,
- eine plankonvexe Linse (106) mit einer planen, insbesondere einem Füllgut zugewandten, Seite, eingerichtet zum Fokussieren des ausgerichteten Radarsignals, wobei die plane Seite (110) der plankonvexen Linse (106) als Kontaktfläche (112) ausgeführt ist, um während einer Messung des Füllstands- und/oder Grenzstands des Füllguts in einem Behälter (108), auf dem Behälter (108) aufzuliegen,
wobei die Radarmessvorrichtung (100) ein Gehäuse (120) umfasst,
wobei in dem Gehäuse die Antennenanordnung (104) angeordnet ist,
wobei das Gehäuse eine Unterseite (122) aufweist,
wobei die Unterseite zumindest teilweise durch die plankonvexe Linse (106) gebildet ist,
wobei die konvexe Seite der plankonvexen Linse (106) in die Antenneneinrichtung hineinragt.

2. Radarmessvorrichtung gemäß Anspruch 1, wobei die plankonvexe Linse (106) mittels einer kraft-, form- und/oder stoffschlüssigen Verbindung, insbesondere mit einer Klebverbindung, an dem Behälter (108) anbringbar ist, sodass die Radarmessvorrichtung (100) an dem Behälter (108) befestigt ist.

3. Radarmessvorrichtung gemäß einem der vorherigen Ansprüche, wobei die plankonvexe Linse (106) aus demselben Material, insbesondere ein Kunststoffverbund, gefertigt ist, wie zumindest ein Teil des Behälters (108).

4. Radarmessvorrichtung gemäß einem der vorherigen Ansprüche, wobei die Antennenanordnung (104) eine Hornantenne aufweist,
wobei eine konvexe Seite (114) der plankonvexen Linse (106) einen Durchmesser (116) aufweist, welcher einem maximalen Innendurchmesser (118) der Hornantenne entspricht.

5. Radarmessvorrichtung gemäß Anspruch 4, wobei das Verhältnis der Oberfläche der konvexen Seite (114) der plankonvexen Linse (106) zu der planen Seite (110) der plankonvexen Linse (106) zwischen 0,5 und 5 liegt.

6. Radarmessvorrichtung gemäß einem der vorherigen Ansprüche, wobei in dem Gehäuse (120) die Radarsignalquelle (102) angeordnet ist.

7. Radarmessvorrichtung gemäß Anspruch 6, wobei die plankonvexe Linse (106) aus demselben Material wie das übrige Gehäuse besteht.

8. Radarmessvorrichtung gemäß einem der Ansprüche 4 - 7, wobei ein Linsenabsatz (124) die konvexe Seite (114) der plankonvexen Linse (106) zumindest teilweise umlaufend umschließt,
wobei der Linsenabsatz (124) parallel zur planen Seite (110) der plankonvexen Linse (106) ausgebildet ist, und wobei der Linsenabsatz (124) zumindest einen Teil der Unterseite (122) ausbildet.

9. Radarmessvorrichtung gemäß Anspruch 6, wobei das Gehäuse (120) mit einer Füllmasse befüllt ist, welche dazu ausgelegt ist, die Antennenanordnung (104) und/oder die Radarsignalquelle (102) vor Feuchtigkeit zu schützen.

10. Radarmessvorrichtung gemäß einem der vorherigen Ansprüche, wobei die Radarmessvorrichtung (100) einen Energiespeicher (126) aufweist, welcher dazu ausgelegt ist, die Radarmessvorrichtung (100) mit Energie dauerhaft zu versorgen.

11. Radarmessvorrichtung gemäß einem der vorherigen Ansprüche, wobei die Antennenanordnung (104) und die plankonvexe Linse (106) mittels einer form-, kraft- und/oder stoffschlüssigen Verbindung verbunden sind und/oder verbindbar sind.

12. Radarmessvorrichtung gemäß Anspruch 11, wobei die form-, kraft- und/oder stoffschlüssige Verbindung zwischen der Antennenanordnung (104) und der plankonvexen Linse (106) eine Dichtung (128) aufweist, welche dazu eingerichtet ist, dass keine Verunreinigungen und/oder Feuchtigkeit in die Antennenanordnung (104) und/oder die Radarsignalquelle (102) eindringen kann.

13. Verfahren zur Montage einer Radarmessvorrichtung gemäß einem der Ansprüche 1-12 an einem Behälter, umfassend den Schritt:
Ausbilden (S1) einer Verbindung, insbesondere mit Hilfe eines Klebstoffes, zwischen einer planen Fläche einer Linse der Radarmessvorrichtung und einem Behälter.

14. Radarmessanordnung, umfassend:
- eine Radarmessvorrichtung gemäß einem der Ansprüche 1 - 12,
- einen Behälter (108), eingerichtet zum Aufnehmen eines Mediums (130), wobei die Radarmessvorrichtung (100) zumindest teilweise auf dem Behälter (108) aufliegt und eine Kontaktfläche (112) ausbildet,
wobei der Behälter (108) an der Kontaktfläche (112) keine Ausnehmung und/oder Aufnahmevorrichtung aufweist.

15. Radarmessanordnung, gemäß Anspruch 14, wobei die Radarmessvorrichtung (100) und der Behälter (108) an der Kontaktfläche (112) zumindest teilweise eine im Wesentlichen gleiche Permittivität aufweisen.

## Claims

1. A radar measuring device (100) for level and/or limit level monitoring, comprising:
- a radar signal source (102) configured to generate, transmit and/or receive a radar signal,
- an antenna arrangement (104) configured to align the radar signal,
- a plano-convex lens (106) with a planar side, in particular a planar side facing a filling material, configured to focus the aligned radar signal,
wherein the plane side (110) of the plano-convex lens (106) is designed as a contact surface (112) to rest on the container (108) during a measurement of the filling level and/or limit level of the filling material in a container (108),
wherein the radar measuring device (100) comprises a housing (120),
wherein the antenna arrangement (104) is disposed in the housing,
wherein the housing comprises a bottom surface (122),
wherein the bottom surface is at least partially formed by the plano-convex lens (106), wherein the convex side of the plano-convex lens (106) protrudes into the antenna arrangement.

2. The radar measuring device according to claim 1, wherein the plano-convex lens (106) is attachable to the container (108) by means of a force-fit, form-fit and/or material-fit connection, in particular with an adhesive connection, so that the radar measuring device (100) is attached to the container (108).

3. The radar measuring device according to any one of the previous claims, wherein the plano-convex lens (106) is made of the same material, in particular a plastic composite, as at least part of the container (108).

4. The radar measuring device according to any one of the preceding claims, wherein the antenna arrangement (104) comprises a horn antenna,
wherein a convex side (114) of the plano-convex lens (106) has a diameter (116) corresponding to a maximum inner diameter (118) of the horn antenna.

5. The radar measuring device according to claim 4, wherein the ratio of the surface area of the convex side (114) of the plano-convex lens (106) to the planar side (110) of the plano-convex lens (106) is between 0.5 and 5.

6. The radar measuring device according to any of the previous claims, wherein the radar signal source (102) is arranged in the housing (120).

7. The radar measuring device according to claim 6, wherein the plano-convex lens (106) is made of the same material as the rest of the housing.

8. The radar measuring device according to any one of claims 4 - 7, wherein a lens shoulder (124) at least partially circumferentially surrounds the convex side (114) of the plano-convex lens (106),
wherein the lens shoulder (124) is formed parallel to the planar side (110) of the plano-convex lens (106), and wherein the lens shoulder (124) forms at least part of the bottom side (122).

9. The radar measuring device according to claim 6, wherein the housing (120) is filled with a filling compound adapted to protect the antenna arrangement (104) and/or the radar signal source (102) from moisture.

10. The radar measurement device according to any one of the preceding claims, wherein the radar measurement device (100) comprises an energy storage (126) adapted to permanently supply the radar measurement device (100) with energy.

11. The radar measuring device according to any of the preceding claims, wherein the antenna arrangement (104) and the plano-convex lens (106) are and/or can be connected by means of a form-fitting, force-fitting and/or material-fitting connection.

12. The radar measuring device according to claim 11, wherein the form-fitting, force-fitting and/or material-fitting connection between the antenna arrangement (104) and the plano-convex lens (106) comprises a seal (128) which is arranged to prevent contaminants and/or moisture from entering the antenna arrangement (104) and/or the radar signal source (102).

13. A method of mounting a radar measuring device according to any one of claims 1-12 on a container, comprising the step of:
forming (S1) a joint, in particular by means of an adhesive, between a flat surface of a lens of the radar measuring device and a container.

14. A radar measurement arrangement comprising:
- a radar measuring device according to any one of claims 1 - 12,
- a container (108) adapted to receive a medium (130),
wherein the radar measuring device (100) at least partially lies on the container (108) and forms a contact surface (112),
wherein the container (108) does not have a recess and/or receiving device at the contact surface (112).

15. The radar measurement arrangement, according to claim 14, wherein the radar measurement device (100) and the container (108) have at least partially a substantially equal permittivity at the contact surface (112).

## Revendications

1. Dispositif de mesure radar (100) pour la surveillance du niveau et/ou du niveau limite, comprenant :
- une source de signal radar (102) fournie pour générer, transmettre et/ou recevoir un signal radar,
- un ensemble d'antenne (104) fourni à aligner le signal radar,
- une lentille plan-convexe (106) avec un côté plane, placée notamment en face d'un matériau de remplissage, disposée pour focaliser le signal radar aligné,
où le côté plane (110) de la lentille plan-convexe (106) est conçu comme une surface de contact (112) destinée à reposer sur le récipient (108) pendant une mesure du niveau de remplissage et/ou du niveau limite de la matière de remplissage dans un récipient (108), le dispositif de mesure radar (100) comprenant un boîtier (120),
le dispositif de mesure radar (100) où l'ensemble d'antenne (104) est disposé dans le boîtier,
un boîtier ayant une surface inférieure (122),
où la surface inférieure est au moins partiellement formée par la lentille plan-convexe (106),
dans lequel le côté convexe de la lentille plan-convexe (106) est intégré dans le dispositif d'antenne.

2. Dispositif de mesure radar selon la revendication 1, dans lequel la lentille plan-convexe (106) peut être fixée sur le récipient (108) au moyen d'une liaison par force, par forme et/ou par matière, en particulier avec une liaison adhésive, de sorte que le dispositif de mesure de radar (100) est fixé sur le récipient (108).

3. Dispositif de mesure radar selon l'une des revendications précédentes, dans lequel la lentille plan-convexe (106) est faite du même matériau, en particulier d'un composite plastique, qu'au moins une partie du récipient (108).

4. Dispositif de mesure radar selon l'une des revendications précédentes, dans lequel l'ensemble d'antenne (104) comprend une antenne cornet,
dans lequel un côté convexe (114) de la lentille plan-convexe (106) a un diamètre (116) correspondant à un diamètre intérieur maximum (118) de l'antenne cornet.

5. Dispositif de mesure radar selon la revendication 4, dans lequel le rapport de la surface du côté convexe (114) de la lentille plan-convexe (106) au côté plan (110) de la lentille plan-convexe (106) est compris entre 0,5 et 5.

6. Dispositif de mesure radar selon l'une des revendications précédentes, dans lequel la source de signal radar (102) est disposée dans le boîtier (120).

7. Dispositif de mesure radar selon la revendication 6, dans lequel la lentille plan-convexe (106) est faite du même matériau que le reste du boîtier.

8. Dispositif de mesure radar selon l'une des revendications 4 - 7, dans lequel un épaulement de lentille (124) entoure au moins partiellement de manière circonférentielle le côté convexe (114) de la lentille plan-convexe (106),
dans lequel l'épaulement de lentille (124) est formé parallèlement au côté plan (110) de la lentille plan-convexe (106), et dans lequel l'épaulement de lentille (124) forme au moins une partie du côté inférieur (122).

9. Dispositif de mesure radar selon la revendication 6, dans lequel le boîtier (120) est rempli d'un composé de remplissage adapté pour protéger l'ensemble d'antenne (104) et/ou la source de signal radar (102) de l'humidité.

10. Dispositif de mesure radar selon l'une des revendications précédentes, dans lequel le dispositif de mesure radar (100) comprend un stockage d'énergie (126) adapté pour alimenter en énergie de manière permanente le dispositif de mesure radar (100).

11. Dispositif de mesure radar selon l'une des revendications précédentes, dans lequel l'ensemble d'antenne (104) et la lentille plan-convexe (106) sont et/ou peuvent être reliés au moyen d'une liaison à ajustement de forme, à ajustement de force et/ou à ajustement de matériau.

12. Dispositif de mesure radar selon la revendication 11, dans lequel la liaison par l'ajustement de forme, de force et/ou de matériau entre l'ensemble d'antenne (104) et la lentille plan-convexe (106) comprend un joint (128) qui est disposé pour empêcher les contaminants et/ou l'humidité de pénétrer dans l'ensemble d'antenne (104) et/ou la source de signal radar (102).

13. Procédé de montage d'un dispositif de mesure radar selon l'une des revendications 1 à 12 sur un conteneur, comprenant l'étape consistant à la formation (S1) d'un joint, notamment au moyen d'un adhésif, entre une surface plane d'une lentille du dispositif de mesure radar et un récipient.

14. Ensemble de mesure radar comprenant :
- un dispositif de mesure radar selon l'une des revendications 1 à 12,
- un conteneur (108) adapté pour recevoir un médium (130),
où le dispositif de mesure radar (100) repose au moins partiellement sur le conteneur (108) et forme une surface de contact (112),
le conteneur (108) ne présentant pas d'un renfoncement et/ou de dispositif de réception au niveau de la surface de contact (112).

15. Ensemble de mesure radar, selon la revendication 14, dans lequel le dispositif de mesure radar (100) et le conteneur (108) ont au moins partiellement une permittivité sensiblement égale au niveau de la surface de contact (112).
